# FASCICULE DE BREVET EUROPEEN

(11) **EP 1 312 761 B1**
(45) Date de publication et mention de la délivrance du brevet: **10.01.2007**
(21) Numéro de dépôt: 02292792.5
(22) Date de dépôt: 08.11.2002
(51) Int. Cl.: F01D 11/12

(54) **Revêtement abradable pour parois de turbines à gaz**
Abreibbare Beschichtung für Mantelringe von Gasturbinen
Abradable layer for gas turbine shrouds

(30) Priorité: 14.11.2001 FR 0114698
(43) Date de publication de la demande: 21.05.2003
(73) Titulaire: SNECMA, 75015 Paris (FR)
(72) Inventeur: Le Biez, Philippe, 91210 Draveil (FR); Vigneau, Joel, 91750 Champcueil (FR)
(74) Mandataire: Thévenet, Jean-Bruno

(56) Documents cités:
- EP-A- 0 716 218
- EP-A- 1 111 195
- DE-U- 8 411 277
- GB-A- 840 573
- US-A- 4 103 905
- US-A- 4 239 452
- US-A- 4 329 308
- US-A- 4 466 772
- US-A- 4 594 053
- US-A- 5 951 892
- US-A- 6 155 778

## Description

### Arrière-plan de l'invention

L'invention concerne les parois de turbines à gaz munies de revêtements abradables, notamment pour moteurs d'avion, tels que carters de compresseurs et anneaux de turbine, et en particulier les carters de compresseurs haute pression et les anneaux de turbine haute pression.

Un anneau de turbine est formé d'une pluralité de secteurs d'anneaux jointifs qui entourent un ensemble d'aubes rotatives mues par les gaz de combustion. Afin d'assurer la tenue des secteurs d'anneau, dont la partie structurale est métallique, aux températures élevées rencontrées en service (pouvant atteindre 1600°C à 1650°C pour la turbine haute pression), il est connu de les munir d'une protection thermique du côté de leurs surfaces exposées aux gaz de combustion. Typiquement, la protection thermique peut être constituée par une couche en céramique ou composition métallique réfractaire formée habituellement par dépôt physique, par exemple par projection thermique telle que dépôt par plasma.

Un carter de compresseur comprend également une ou plusieurs structures annulaires, qui peuvent être formées d'une pluralité de secteurs annulaires jointifs et sont situées en regard d'un ou plusieurs ensembles d'aubes avec mouvement de rotation relatif entre aubes et structures annulaires.

Afin d'assurer le meilleur rendement possible de la turbomachine, il est impératif d'éviter ou au moins de limiter au minimum des fuites de gaz entre les sommets des aubes et la surface en regard du carter de compresseur ou de l'anneau de turbine, lesquelles fuites ne contribuent pas au fonctionnement de la turbomachine. La recherche d'une absence de jeu ou d'un jeu minimum fait que des contacts peuvent être inévitables entre les sommets des aubes et le matériau situé en vis-à-vis. En raison de la dureté habituelle de ce matériau, de tels contacts peuvent être destructeurs vis-à-vis des sommets d'aubes.

Afin de résoudre ce problème, il a été proposé d'améliorers l'abradabilité du matériau situé en vis-à-vis des aubes, c'est-à-dire sa capacité à être attaqué physiquement par les sommets des aubes sans induire d'usure importante de ces derniers. Une technique connue à cet effet pour un matériau de revêtement d'anneau de turbine consiste à engendrer une porosité importante, par exemple en mélangeant des billes creuses ou des particules de polymère à la composition utilisée pour la mise en oeuvre du matériau. La porosité obtenue par les vides créés par les billes creuses ou par la disparition à la chaleur des particules de polymère peut atteindre 10 % à 20 %, voire au plus environ 30 % du volume total du matériau. On pourra se référer notamment aux documents de brevets GB 2 152 079.

Si la création de porosité conduit à un matériau plus tendre, donc ayant un caractère abradable amélioré, c'est toutefois au détriment de la tenue aux températures élevées.

On connait aussi du document EP 1111195 un matériau abradable dans lequel sont formés des cavités. Pour au moins deux tiers de la surface abradable, la direction des nervures entourent les cavités est différente d'au moins 30° par rapport à la direction de mouvement des aubes.

### Objet et résumé de l'invention

L'invention a pour but de fournir une partie annulaire de turbine à gaz, tel que carter de compresseur ou anneau de turbine, ayant un revêtement qui présente un caractère abradable élevé, tout en offrant éventuellement une protection thermique efficace.

Ce but est atteint grâce à un assemblage selon la revendication 1

La réalisation de cavités dans le revêtement permet d'accroître de façon importante le caractère abradable. En effet, grâce à la présence des cavités, la partie externe du revêtement dans laquelle les cavités sont formées peut présenter un taux d'évidement, assimilable à une porosité, supérieur à 40 %, par exemple compris entre 40 % et 60 %, sans affecter la tenue mécanique du revêtement.

Le fait que les parois des cavités forment une pluralité de trajets continus entre les faces de l'anneau permet d'éviter la formation de passages de fuite au niveau de la surface de l'anneau dans le cas d'une pénétration de l'extrémité d'un sommet d'aube dans le revêtement, créant un sillon circonférentiel coupant des parois de cavités.

La profondeur des cavités est choisie supérieure à la profondeur de pénétration maximale estimée des sommets d'aubes dans le revêtement, tout en restant limitée pour ne pas fragiliser le revêtement. Une valeur comprise entre 0,3 mm et 1 mm est préférée.

Ainsi, les alvéoles sont à section quadrangulaire, par exemple carrée et sont séparées par des parois formant un quadrillage à la surface du revêtement.

L'invention vise aussi une turbine à gaz comprenant un ensemble d'aubes rotatives entouré par une partie annulaire telle que définie ci-dessus.

Les aubes peuvent avoir des sommets avec des rebords chanfreinés afin de faciliter leur pénétration dans le revêtement abradable.

### Brève description des dessins

L'invention sera mieux comprise à la lecture de la description faite ci-après à titre indicatif mais non limitatif en référence aux dessins annexés sur lesquels :
- la figure 1 est une vue très schématique en perspective d'un secteur d'anneau de turbine de turbomachine selon un mode de réalisation de l'invention ;
- la figure 2 est une vue développée du revêtement abradable du secteur d'anneau de la figure 1 ;
- la figure 3 est une demi-vue en coupe d'un anneau de turbine formé de secteurs tels que celui de la figure 1 ;
- la figure 4 est une vue schématique de détail en perspective d'un sommet d'aube de turbine haute pression ;
- la figure 5 est une vue en coupe selon le plan V-V de la figure 4 ; et
- les figures 6 à 8 sont des vues développées d'autres modes de réalisation de revêtements abradables de secteurs d'anneau de turbine.

### Description détaillée de modes de réalisation de l'invention

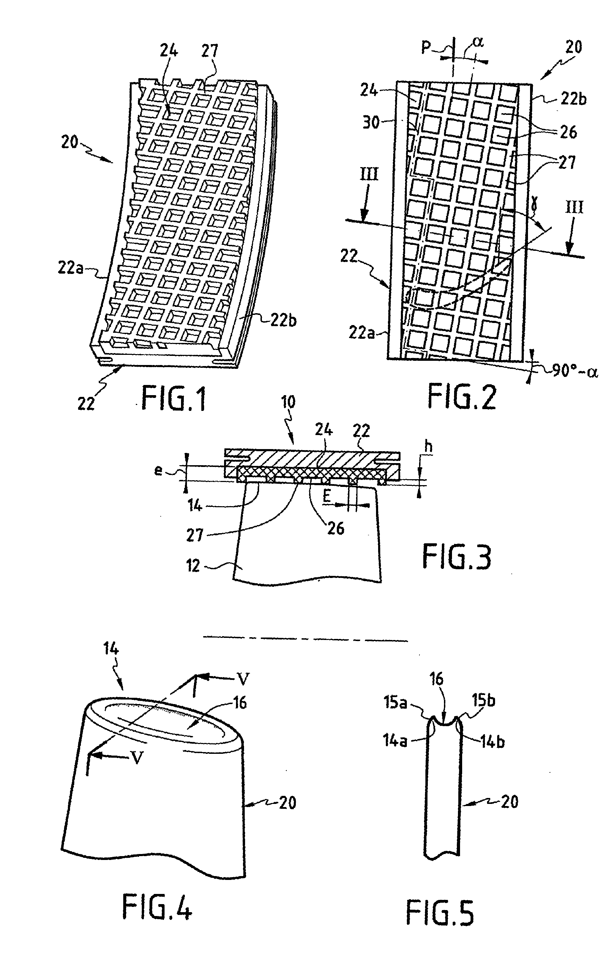

Les figures 1 et 2 montrent, en perspective et en vue de face développée, un secteur d'anneau 20 permettant, en plaçant une pluralité de secteurs bout à bout en direction circonférentielle de constituer un anneau de turbine 10 tel que montré en coupe sur la figure 3, par exemple un anneau de turbine haute pression de turbomachine. L'anneau 10 entoure un ensemble rotatif formé d'une pluralité d'aubes 12, le jeu entre la surface intérieure de l'anneau et les sommets 14 des aubes étant nul ou quasi-nul.

Le secteur d'anneau 20 comprend un support métallique structural 22 muni du côté intérieur d'un revêtement de protection thermique abradable 24 dans lequel les sommets des aubes 10 peuvent partiellement pénétrer sans subir d'usure importante. Dans l'exemple illustré, le revêtement abradable s'étend entre deux rebords 22a, 22b formant les extrémités axiales du secteur d'anneau.

Le support 22 est en un matériau métallique capable de supporter des températures relativement élevées, par exemple en superalliage à base Ni ou Co.

Le revêtement abradable 24 est réalisé en un matériau ayant une tenue satisfaisante aux températures élevées. Différents matériaux peuvent être envisagés, selon les températures rencontrées en service, tels que :
- superalliage de type MCrAIY (M étant un métal choisi parmi Fe, Ni et Co),
- céramiques par exemple zircone (ZᵣO₂) éventuellement additionnée d'autres oxydes réfractaires, par exemple oxyde d'yttrium (Y₂O₃).

Le matériau du revêtement abradable est déposé sur le support 20 par un procédé de dépôt physique, par exemple par projection thermique de poudre en utilisant les techniques connues de dépôt par plasma, ou par brasage de préformes obtenues par des procédés de mise en ouvre de poudres, comportant des phases de moulage, déliantage et frittage.

Des cavités 26 sont formées dans le matériau abradable qui s'ouvrent à la surface exposée de celui-ci. Dans l'exemple des figures 1 à 3, les cavités sont des alvéoles 26 à section quadrangulaire, plus particulièrement carrées. Elles s'étendent sur une profondeur h inférieure à l'épaisseur e totale du revêtement.

La profondeur h est au moins égale et de préférence un peu supérieure à la profondeur maximale estimée de pénétration des aubes dans le matériau abradable lors d'une interférence entre aubes rotatives et anneau de turbine. On choisira pour la profondeur h une valeur comprise, entre 0,3 mm et 1 mm, de préférence entre 0,4 mm et 0,8 mm. Quant à l'épaisseur totale e, elle est de préférence comprise entre 0,8 mm et 1,2 mm.

Les alvéoles 26 peuvent être formées par enlèvement de manière après dépôt du matériau de protection thermique. Différents procédés d'usinage connus peuvent être utilisés tels que fraisage, perçage, électro-érosion, électrochimie, usinage chimique, usinage par laser, jet d'eau abrasif, usinage ultrasonique. En variante, les alvéoles 26 peuvent être formées par moulage d'une préforme constituée par les poudres devant former le matériau abradable, au moyen d'un moule comportant un relief inverse à celui des alvéoles.

Les alvéoles 26 sont séparées par des parois 27. Les parois 27 ont une épaisseur E leur permettant de présenter une tenue mécanique suffisante. Selon le matériau utilisé pour le revêtement 24, on choisira pour E une valeur comprise entre environ 1 mm et 2 mm. Avec des cavités à section quadrangulaire, les parois 27 forment un quadrillage selon deux directions principales formant des angles α et 90°-α par rapport à un plan perpendiculaire à un axe de rotation de l'ensemble rotatif tel que le plan radial P.

Les dimensions des cavités, par rapport à la dimension axiale de l'anneau 10 sont choisies de manière que les parois 27 forment une pluralité de trajets continus espacés les uns des autres entre les bords d'extrémité axiale de l'anneau. Un tel trajet continu est montré par la ligne en tirets 30 de la figure 2. De la sorte, en cas d'interférence entre les aubes et l'anneau de turbine se traduisant par la formation d'un sillon continu dans le matériau abradable, le risque de fuite périphérique notable pour les gaz parcourant la turbine est évité.

Conformément à l'invention, on évite que l'une des directions des parois soit sensiblement parallèle à la direction générale des parties d'extrémité des aubes susceptibles d'entrer en contact avec le matériau abradable, afin de limiter les frottements éventuels entre ces parties d'extrémité et le matériau abradable et donc de limiter l'usure. C'est ainsi que l'angle α est différent d'au moins 5° par rapport à l'angle de calage γ des parties d'extrémités d'aube comme montré en traits interrompus sur la figure 2.

Par ailleurs, l'angle α est choisi de manière à disposer les parois des alvéoles pour que tout point de l'extrémité d'une aube amenée à interférer avec le revêtement abradable rencontre sensiblement un même volume de matériau abradable. Ainsi, l'angle α, qui est le plus petit des deux angles formés par les directions principales des parois par rapport au plan P est choisi de préférence entre 0° et 20°, plus particulièrement entre 5° et 15°.

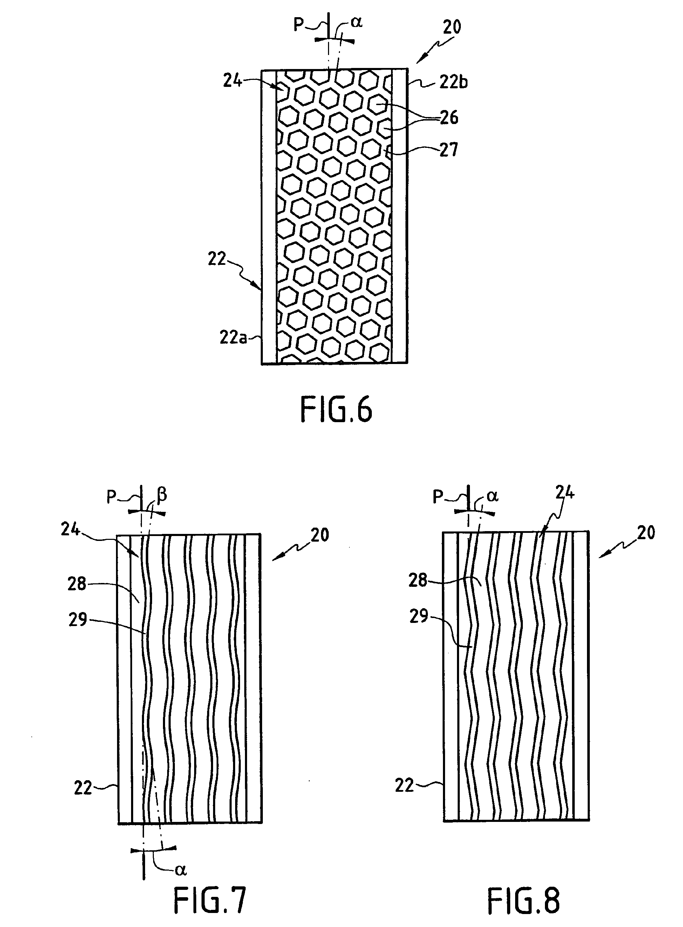

Comme le montre la figure 5, un ou les deux rebords 14a, 14b du sommet d'aube 14 qui bordent la cavité 16, ou "baignoire" présente sur ce sommet peuvent être chanfreinés (en 15a, 15b) afin de faciliter la pénétration dans le matériau abradable.

La formation des alvéoles permet, dans la partie du revêtement abradable sur l'épaisseur de laquelle s'étendent les cavités, d'atteindre une "porosité" ou taux d'évidement d'au moins 40 %, pouvant aisément atteindre 60 %. La "porosité" ou taux d'évidement est ici défini comme le pourcentage du volume occupé par les alvéoles dans la partie externe du revêtement abradable susceptible d'entrer en interférence avec les sommets d'aubes.

Bien entendu, des résultats équivalents peuvent être obtenus avec des cavités polygonales ayant des sections autres que carrée ou quadrangulaire.

On s'efforcera de conférer aux parois entre cavités ou au moins à la majorité d'entre elles une direction non parallèle à un plan radial.

Ainsi, la figure 6 montre un revêtement abradable qui se distingue de celui de la figure 2 en ce que les alvéoles 26 sont de section hexagonale avec deux côtés parallèles, formant l'angle α par rapport au plan P.

Les figures 7 et 8 montrent des cavités 28 qui ne sont pas sous forme d'alvéoles, mais sous formes de rainures circonférentielles continues séparées par des parois 29.

Les parois 29 forment une pluralité de nervures qui s'étendent de façon continue en direction circonférentielle, de sorte que plusieurs parois 29 espacées les unes des autres se trouvent entre les bords d'extrémité de l'anneau de turbine.

Les parois 29 peuvent avoir une direction générale parallèle à un plan radial P ou légèrement inclinée par rapport à celui-ci.

Afin de ne pas présenter une paroi continue circonférentielle en regard d'un rebord de sommet d'aube susceptible d'interférer avec l'anneau, les parois 29 suivent un trajet non rectiligne.

Dans l'exemple de la figure 7, les parois 29 suivent un trajet ondulé. L'angle α formé par la tangente aux parois 29 par rapport à un plan radial P varie entre 0° et β. On choisira de préférence pour la valeur maximale β un angle de 20°.

Dans l'exemple de la figure 8, les parois 29 suivent un trajet en ligne brisée. L'angle α formé par les segments des parois 28 par rapport à un plan radial P est choisi de préférence comme indiqué plus haut pour le mode de réalisation de la figure 2, à savoir compris entre -20° et +20°, plus particulièrement entre -10° et +10°.

### Essais

Un secteur d'anneau a été réalisé comme illustré sur la figure 1 avec un matériau abradable constitué d'un alliage NiCrAI contenant des billes creuses en matériau silico-alumineux. Le matériau abradable a été déposé par dépôt par plasma sur le support métallique.

Des cavités sous forme d'alvéoles de section carrée ont été formées par usinage par électroérosion. A cet effet, un outil adapté (électrode) a été réalisé par fraisage de rainures, formant quadrillage, dans un bloc en cuivre. Les alvéoles ont été obtenues en une seule plongée de l'électrode dans le matériau abradable.

Des cavités de côté égal à 2 mm ont été formées sur une profondeur de 0,7 mm, étant séparées par des parois d'épaisseur égale à 1 mm, la largeur totale du revêtement abradable étant égale à plus de 20 mm.

Un essai a été réalisé au moyen d'un rotor comprenant trois extrémités d'aubes réparties à sa périphérie, avec une vitesse circonférentielle de 200 m/s, une vitesse de pénétration dans le matériau abradable de 0,15 mm/s et une profondeur totale de pénétration de 0,5 mm.

A titre comparatif, un essai a été réalisé sans formation d'alvéoles dans le matériau abradable, les autres conditions d'essais étant identiques.

Le tableau ci-dessous donne les résultats des mesures effectuées des efforts tangentiels, radial et axial lors de la pénétration et de l'usure de l'extrémité de l'aube après essai.

| | | Matériau abradable sans alvéoles | Matériau abradable avec alvéoles |
|---|---|---|---|
| Effort tangentiel | (N) | 15,1 | 0,29 |
| Effort radial | (N) | 69,3 | 32,5 |
| Effort axial | (N) | 13,3 | 5,4 |
| Usure extrémité aube | (mm) | 0,32 à 0,64 | 0,14 |

Avec un matériau abradable réalisé conformément à l'invention, les efforts mesurés ont été divisés au moins par 2 et l'usure constatée a été divisée par environ 3.

Bien que l'on ait envisagé dans la description qui précède l'application à un anneau de turbine, l'invention est également utilisable pour des revêtements abradables de carters de compresseur. Dans ce cas, les revêtements abradables n'ont pas la même fonction de protection thermique que pour des anneaux de turbine. Ils peuvent être réalisés par exemple en un alliage à base aluminium ou nickel éventuellement mis en oeuvre en étant additionné de particules organiques, de particules de graphite, de billes creuses organiques et/ou de billes creuses céramiques. Hormis la composition, les autres caractéristiques des matériaux abradables pourront être identiques à celles des revêtements d'anneaux de turbine décrits ci-avant.

## Revendications

1. Assemblage de turbine à gaz, comportant une partie annulaire montée en vis-à-vis d'un ensemble d'aubes rotatives, ladite partie annulaire étant munie d'un revêtement en matériau abradable, ledit revêtement (24) présentant des cavités (26) à section quadrangulaire qui s'ouvrent à la surface du revêtement, s'étendent sur une partie de l'épaisseur du revêtement et sont délimitées par des parois (27) qui forment une pluralité de trajets continus à la surface interne de la partie annulaire entre des faces d'extrémité axiales de celle-ci, **caractérisé en ce qu'**au moins une partie des parois (27) ont des directions principales qui forment un angle compris entre 0° et 20°par rapport à un plan radial (P) perpendiculaire à un axe de rotation des aubes.

2. Assemblage selon la revendication 1, caratérisé en ce que les cavités ont une profondeur comprise entre 0,3 mm et 1 mm.

3. Assemblage selon l'une des revendications 1 et 2, **caractérisé en ce que** la partie externe du revêtement (24) dans lesquelles les cavités sont formées présente un taux d'évidement compris entre 40 % et 60 %.

4. Assemblage selon l'une quelconque des revendications 1 à 3, **caractérisé en ce que** l'angle formé entre une partie des parois (27) et le plan radial (P) est compris entre 5° et 15°.

5. Partie annulaire d'un anneau de turbine à gaz, ladite partie annulaire étant munie d'un revêtement en matériau abradable, ledit revêtement (24) présentant des cavités (26) à section quadrangulaire qui s'ouvrent à la surface du revêtement, s'étendent sur une partie de l'épaisseur du revêtement et sont délimités par des parois (27) qui forment une pluralité de trajets continus à la surface interne de la partie annulaire entre des faces d'extrémité axiales de celle-ci, **caractérisé en ce qu'**au moins une partie des parois (27) ont des directions principales qui forment un angle compris entre 0° et 20° par rapport à un plan perpendiculaire à l'axe de la partie annulaire.

6. Anneau de turbine à gaz comportant au moins une partie annulaire selon la revendication 5.

7. Carter de compresseur pour turbine à gaz, **caractérisé en ce qu'**il comprend un assemblage conforme à l'une quelconque des revendications 1 à 4.

8. Turbine comprenant un assemblage conforme à l'une quelconque des revendications 1 à 4.

9. Turbine selon la revendication 8, **caractérisée en ce que** les aubes (20) ont des sommets (24) qui présentent des rebords (14a, 14b) munis de chanfreins (15a, 15b).

## Claims

1. A gas turbine assembly, including an annular portion mounted facing a set of rotary blades, said annular portion being provided with a coating of abradable material, said coating (24) presenting cavities (26) that are quadrangular in section, open to the surface of the coating, that extend over a fraction of the thickness of the coating, and that are defined by walls (27) which form a plurality of continuous paths on the inside surface of the annular portion between its axial end faces, the assembly being **characterised in that** at least a portion of the walls (27) have main directions forming an angle lying in the range 0° to 20° relative to a radial plane (P) perpendicular to the axis of rotation of the blades.

2. An assembly according to claim 1, **characterised in that** the cavities are of a depth lying in the range 0.3 mm to 1 mm.

3. An assembly according to claim 1 or claim 2, **characterised in that** the external portion of the coating (24) in which the cavities are formed present a void content lying in the range 40% to 60%.

4. An assembly according to any one of claims 1 to 3, **characterised in that** the angle formed between a portion of the walls (27) and the radial plane (P) lies in the range 5° to 15°.

5. An annular portion of a gas turbine ring, said annular portion being provided with a coating of abradable material, said coating (24) presenting cavities (26) that are quadrangular in section, open to the surface of the coating, that extend over a fraction of the thickness of the coating, and that are defined by walls (27) which form a plurality of continuous paths on the inside surface of the annular portion between its axial end faces, the assembly being **characterised in that** at least a portion of the walls (27) have main directions forming an angle lying in the range 0° to 20° relative to a plane perpendicular to the axis of the annular portion.

6. A gas turbine ring including at least one annular portion according to claim 5.

7. A compressor casing for a gas turbine, **characterised in that** it comprising an assembly in accordance with any one of claims 1 to 4.

8. A turbine comprising an assembly in accordance with any one of claims 1 to 4.

9. A turbine according to claim 8, **characterised in that** the blades (20) have tips (24) presenting rims (14a, 14b) that are provided with chamfers (15a, 15b).

## Patentansprüche

1. Gasturbinenanordnung, umfassend ein ringförmiges Teil, das gegenüber einer Anordnung von Rotorschaufeln angebracht ist, wobei das ringförmige Teil mit einer Auskleidung aus Abriebsmaterial versehen ist, wobei die Auskleidung (24) Ausnehmungen (26) mit viereckigem Querschnitt aufweist, die sich zur Oberfläche der Auskleidung hin öffnen, sich über einen Teil der Dicke der Auskleidung erstrecken und durch Wände (27) begrenzt sind, die eine Vielzahl von kontinuierlichen Bahnen zur inneren Oberfläche des ringförmigen Teils zwischen den axialen Endseiten desselben ausbilden, **dadurch gekennzeichnet, daß** wenigstens ein Teil der Wände (27) Hauptrichtungen hat, die einen Winkel zwischen 0°und 20° im Verhältnis zu einer Radialebene (P) ausbilden, die senkrecht zur Rotationsachse der Schaufeln ist.

2. Anordnung nach Anspruch 1, **dadurch gekennzeichnet, daß** die Ausnehmungen eine Tiefe zwischen 0,3 mm und 1 mm haben.

3. Anordnung nach einem der Ansprüche 1 oder 2, **dadurch gekennzeichnet, daß** der äußere Teil der Auskleidung (24), in dem die Ausnehmungen ausgebildet sind, einen Hohlraumanteil zwischen 40% und 60% aufweist.

4. Anordnung nach einem der Ansprüche 1 bis 3, **dadurch gekennzeichnet, daß** der Winkel, der zwischen einem Teil der Wände (27) und der Radialebene (P) ausgebildet ist, zwischen 5° und 15° liegt.

5. Ringförmiges Teil eines Ringes einer Gasturbine, wobei das ringförmige Teil mit einer Auskleidung aus Abriebsmaterial versehen ist, wobei die Auskleidung (24) Ausnehmungen (26) mit viereckigem Querschnitt aufweist, die sich zur Oberfläche der Auskleidung hin öffnen, sich über einen Teil der Dicke der Auskleidung erstrecken und durch Wände (27) begrenzt sind, die eine Vielzahl von kontinuierlichen Bahnen zur inneren Oberfläche des ringförmigen Teils zwischen den axialen Endseiten desselben ausbilden, **dadurch gekennzeichnet, daß** wenigstens ein Teil der Wände (27) Hauptrichtungen hat, die einen Winkel zwischen 0° und 20° im Verhältnis zu einer Ebene ausbilden, die senkrecht zur Achse des Ringteils ist.

6. Gasturbinenring, umfassend wenigstens ein ringförmiges Teil nach Anspruch 5.

7. Kompressorgehäuse für eine Gasturbine, **dadurch gekennzeichnet, daß** es eine Anordnung gemäß einem der Ansprüche 1 bis 4 umfaßt.

8. Turbine, umfassend eine Anordnung gemäß einem der Ansprüche 1 bis 4.

9. Turbine nach Anspruch 8, **dadurch gekennzeichnet, daß** die Schaufeln (20) Spitzen (24) haben, die Ränder (14a, 14b) aufweisen, die mit abgeschrägten Kanten (15a,15b) versehen sind.
